# EUROPÄISCHE PATENTSCHRIFT

(11) **EP 2 080 457 B1**
(45) Veröffentlichungstag und Bekanntmachung des Hinweises auf die Patenterteilung: **26.10.2011**
(21) Anmeldenummer: 09100029.9
(22) Anmeldetag: 12.01.2009
(51) Int. Cl.: A47J 31/44, A47J 31/58

(54) **Kaffeevollautomat mit Serviceanzeige**
Fully automatic coffee machine with service display
Machine à café totalement automatique dotée d'un affichage de service

(30) Priorität: 21.01.2008 DE 102008005362
(43) Veröffentlichungstag der Anmeldung: 22.07.2009
(73) Patentinhaber: BSH Bosch und Siemens Hausgeräte GmbH, 81739 München (DE)
(72) Erfinder: Mathes, Dr. Anton, 83364 Neukirchen am Teisenberg (DE); Ostermaier, Albert, 83371 Stein a.d. Traun (DE)

(56) Entgegenhaltungen:
- EP-A- 0 783 859
- EP-A- 1 336 365
- EP-A- 1 733 662
- WO-A-02/069769
- WO-A-2005/099535
- GB-A- 2 325 179

## Beschreibung

Die vorliegende Erfindung betrifft einen Kaffeevollautomaten mit Funktionseinheiten, die zur Durchführung von Servicetätigkeiten wie einer Befüllung und/oder Leerung und/oder Wartung in eine Serviceposition bewegbar sind, die sich von Betriebspositionen der Funktionseinheiten unterscheidet. Unter "Funktionseinheiten" können sowohl Teileinheiten des Kaffeevollautomaten, beispielsweise der Wasservorratsbehälter, die Brühgruppe oder der Verschluss des Kaffeebohnenbehälters, als auch der Kaffeevollautomat als Ganzes verstanden werden. Eine Serviceposition ist eine Stellung einer Funktionseinheit, aus der heraus Servicetätigkeiten an der Funktionseinheit durchgeführt werden können.

Um den Betrieb eines Kaffeevollautomaten zu gewährleisten, sind regelmäßig verschiedene Servicetätigkeiten notwendig, wie zum Beispiel die Befüllung von Vorratsbehältern mit Kaffeebohnen bzw. Kaffeemehl oder mit Brühwasser und die Leerung des Kaffeevollautomaten von Brühresten wie Trester, verbrauchten Filtern oder Restwasser. Zusätzlich ist es von Zeit zu Zeit notwendig, den Kaffeevollautomaten zu warten, beispielsweise zu entkalken oder,die Brühgruppe zu reinigen.

Um an die zu befüllenden, zu leerenden oder zu wartenden Funktionseinheiten gelangen zu können, muss ein Benutzer oftmals zahlreiche Handgriffe durchführen, was den Bedienungskomfort des Geräts mindert. Insbesondere bei Einbau-Kaffeevollautomaten, die in Einbaunischen, beispielsweise von Küchenschränken, integriert sind, ist nicht immer gewährleistet, dass alle Funktionseinheiten von der Frontseite des Kaffeevollautomaten erreichbar sind und somit Servicetätigkeiten einfach ausgeführt werden können. Die EP 0 783 859 A offenbart beispielsweise die Trennung des Bedienund Ausgabebereiches von dem Vorrats- und/ oder Entsorgebereich durch eine Tür. Dadurch sind auch die hinter dem Bedien- und Ausgabebereich liegenden Behälter schnell zugänglich. Diese Behälter können ausgezogen und nachgefüllt bzw. entleert werden.

Aber auch bei frei stehenden Kaffeevollautomaten stellt sich das prinzipielle Problem einer erschwerten Erreichbarkeit bestimmter Funktionseinheiten, speziell derer, die im hinteren Bereich des Gehäuses der Kaffeevollautomaten angeordnet oder aus Designgründen nicht leicht erkennbar sind.

Die WO 2005/099535 A2 zum Beispiel beschreibt eine derartige Vorrichtung zum Herstellen eines Brühgetränkes, die in einem Aufnahmehohlraum angeordnet ist und aus diesem zu Wartungs- und anderen Servicetätigkeiten herausgezogen werden kann. Lediglich eine Restwasserschale kann von einer Frontseite aus bedient werden. Sie weist dazu eine Grifffläche in der Gerätefront zum Herausnehmen einer Restwasserschale aus der kompletten Geräteeinheit auf.

Aufgabe der vorliegenden Erfindung ist es, einem Benutzer die Bedienung eines Kaffeevollautomaten bei Servicetätigkeiten zu erleichtern, insbesondere durch einen verbesserten Zugang zu wichtigen Funktionseinheiten und/oder durch eine leicht verständliche Signalisierung eines Servicebedarfs.

Diese Aufgabe wird bei einem Kaffeevollautomaten der eingangs genannten Art gelöst durch einen Aktuator, der bei einem Servicebedarf die betroffene Funktionseinheit aus einer Betriebsposition in die Serviceposition selbsttätig befördert.

Ein Benutzer wird also bei der Durchführung von Servicetätigkeiten unterstützt, indem eine Funktionseinheit, die befüllt und/oder geleert und/oder gewartet werden soll, aus ihrer ursprünglichen Position herausgeführt wird und somit einer zur Durchführung der Servicetätigkeit geeigneten Position zumindest näher gebracht wird. Ein Benutzer kann also die zu befüllende, zu leerende oder zu wartende Funktionseinheit durch die geänderte Position besser erkennen. Beispielsweise kann ein leerer Wasserbehälter in eine Serviceposition befördert werden, von wo aus er einfacher aus dem Gerät entnommen und gefüllt werden kann. Durch seine geänderte Position springt dem Benutzer förmlich ins Auge, dass der Wasserbehälter befüllt werden muss.

Erfindungsgemäß befördert der Aktuator die Funktionseinheit selbsttätig. Hierdurch wird gewährleistet, dass ein Benutzer sich darauf verlassen kann, dass die Lageänderung bei einem Servicebedarf ohne seine Unterstützung erfolgt, sodass er die jeweilige Funktionseinheit bereits daran erkennen und in der bereitgestellten Position entgegennehmen kann. Eine selbsttätige Beförderung ist beispielsweise gewährleistet durch mechanisch durchgeführte Bewegungen, beispielsweise durch Federn oder mit Hilfe schiefer Ebenen. Ist ein derartiger Aktuator einmal in Betrieb gesetzt, so führt er von sich aus die Beförderungsbewegung aus der Betriebsposition in Richtung der Serviceposition durch.

Bevorzugterweise weist der Kaffeevollautomat eine Aktivierungsvorrichtung auf, die zu einer Initiierung der Beförderung durch den Aktuator von einem Benutzer betätigbar ist. Vor der Beförderung der Funktionseinheit aus ihrer Betriebsposition in die Serviceposition betätigt ein Benutzer die Aktivierungsvorrichtung, um die Beförderungsbewegung in Gang zu setzen. Die Aktivierungsvorrichtung - beispielsweise ein Druckknopf - wirkt vorteilhafterweise sichernd, so dass der Benutzer gewährleisten kann, dass der Aktuator durch die Beförderungsbewegung keine Gefährdung hervorruft. Beispielsweise könnte anderenfalls der Kaffeevollautomat durch die Beförderungsbewegung in seiner Lage instabil oder ein Einbau-Kaffeevollautomat zu einem für einen Benutzer ungünstigen Zeitpunkt aus einer Einbaunische herausbewegt werden, so dass eine Kollisionsgefahr für den Benutzer oder andere Personen entsteht. Gleichzeitig bringt eine derartige Aktivierungsvorrichtung dem Benutzer zusätzlichen Komfort. So kann es beispielsweise sein, dass ein Benutzer nach Bezug eines Kaffeegetränks keine Zeit zur Durchführung einer Servicetätigkeit hat. Da die entsprechende Funktionseinheit nicht sofort aus ihrer Betriebsposition in die Serviceposition befördert wird, sondern der Benutzer diese Beförderung zu einem anderen, von ihm gewählten Zeitpunkt aktivieren kann, erhöht sich für ihn die Flexibilität, was den Nutzen der Erfindung nicht in ein lästiges Gegenteil verkehrt.

Eine bevorzugte Ausführungsform der Erfindung sieht eine akustische und/oder optische Signalvorrichtung vor, die einen Benutzer über einen Servicebedarf informiert. Zusätzlich zur Bewegung der Funktionseinheit aus ihrer Betriebsposition heraus erhält der Benutzer durch die Signalvorrichtung einen weiteren Hinweis auf den Servicebedarf. So kann eine optische Signalvorrichtung beispielsweise in Form von Licht an der bzw. im Bereich der mit einer Servicetätigkeit zu bedienenden Funktionseinheit vorgesehen sein. Eine Lichtquelle kann in eine - ggf. transparente - Wasserbehälterwand eingekoppelt werden, so dass die umlaufende Oberkante des Wasserbehälters oder der ganze Wasserbehälter leuchtet, je nach Beigabe von lichtstreuenden Beimengungen im Material des Wasserbehälters. Mit einem ähnlichen Effekt kann ein Behälterdeckel beleuchtet werden.

Auch andere Anbringungsmöglichkeiten für Lichtsignalgeber am Kaffeevollautomaten im Zusammenhang mit der Bewegung von Funktionseinheiten durch einen Aktuator sind ausführbar, beispielsweise das Hinterleuchten von Schaltknöpfen. Ebenfalls kann als optische Signalvorrichtung ein Informationsdisplay mit Text- bzw. Symbolinhalten vorgesehen sein, das den Servicebedarf der jeweiligen bewegten Funktionseinheit näher spezifiziert. In Abhängigkeit von der Art der Servicetätigkeit kann auch eine bestimmte Farbgebung des Lichts oder des Displays definiert werden. Als akustische Signale können beispielsweise Tonsignale dienen, oder eine Stimme, die eine Erklärung zum jeweiligen Servicebedarf liefert.

Gemäß einer bevorzugten Ausführungsform der Erfindung ist der Aktuator ein Motor, vorzugsweise ein Elektromotor. Gegenüber anderen Aktuatoren weisen Motoren den Vorteil auf, dass sie einfach regel- bzw. steuerbar sind, wodurch Fehlbedienungen bzw. ein Fehlbetrieb leichter auszuschließen sind.

Eine bevorzugte Ausführungsform der Erfindung sieht eine Sicherheitssensorik und -steuerung vor, die im Betrieb die Beförderung abbricht, wenn ein unerwartet hoher mechanischer Widerstand entgegen der Beförderungsrichtung des Aktuators wirkt und/oder bevor der Kaffeevollautomat in seiner Lage instabil wird. Die Sicherheitssensorik und -steuerung stellt - ähnlich wie bei der Sensorik elektrischer Fensterheber in Automobilen - sicher, dass durch die Bewegung der Funktionseinheit keine Verletzungen bzw. Instabilitäten auftreten. Beispielsweise mittels einer Kippsensorik kann frühzeitig festgestellt werden, wenn der Kaffeevollautomat durch die Bewegung der Funktionseinheit in einen Lagezustand gerät, in der er instabil zu werden droht. Dann wird die Bewegung der Funktionseinheit abgebrochen.

Unter "Funktionseinheiten" können zum Beispiel die folgenden Komponenten zu verstehen sein: ein Wasserbehälter, ein Kaffeebohnen- oder -mehlbehälter, ein Tresterbehälter, ein Restwasserbehälter, eine Dampfdüse, eine Brüheinheit, einen Pulverschacht und eine Mahleinheit. Alle diese Komponenten sind servicebedürftig, weil sie befüllt oder geleert oder regelmäßig gewartet werden müssen bzw. sollten. Der optische und ggf. akustische Hinweis auf einen Servicebedarf bietet sich daher zumindest bei diesen Funktionseinheiten an.

Bevorzugt ist ein Kaffeevollautomat zum Einbau in Einbaunische so ausgebildet, dass der Aktuator bei einem Servicebedarf mindestens einer Funktionseinheit den Kaffeevollautomaten in seine Serviceposition bewegt. Gerade bei Einbaukaffeevollautomaten können Funktionseinheiten mit Servicebedarf schwer zugänglich sein. Deshalb kann es erforderlich sein, dass derartige Einbau-Kaffeevollautomaten als Ganzes bewegt werden können, so dass anderenfalls unzugängliche Funktionseinheiten durch die Bewegung zugänglich werden.

Dabei ergibt sich der folgende prinzipielle Funktionsablauf: Durch eine entsprechende Sensorik im Kaffeevollautomaten wird ein Servicebedarf an einem bestimmten Funktionselement erkannt. Ein Aktuator bewegt den Kaffeevollautomaten von seiner Betriebsposition im Bereich einer Einbaunische in seine Serviceposition. Hierzu kann der Kaffeevollautomat auf Schienen, Rädern oder Gleitlagern gelagert sein und beispielsweise mit Hilfe von Zahnrädern, Zahnriemen, Linearmotoren, drehenden Gewindestangen, Hydraulik- oder Pneumatikzylindern bewegt werden. Zusätzlich zur Bewegung des Kaffeevollautomaten kann das Funktionselement aus seiner Betriebsposition in Richtung seiner Serviceposition befördert werden.

Gemäß einer bevorzugten Ausführungsform kann der Aktuator die Funktionseinheit im Betrieb nach Durchführung der Servicetätigkeiten in Richtung von der Serviceposition zurück in die Betriebsposition bewegen. Der Aktuator dient dann also auch dazu, die Funktionseinheit zumindest in Richtung seiner Betriebsposition zu befördern. Hierdurch können Handgriffe des Benutzers wegfallen. Speziell wenn Funktionseinheiten für einen Benutzer in schwer zugänglichen Positionen liegen, ist es vorteilhaft, wenn sie der Benutzer nur zurück in eine für ihn gut zugängliche Serviceposition führt und der Aktuator die Funktionseinheit kontrolliert in die Betriebsposition zurück befördert.

Gemäß einer weiteren bevorzugten Ausführungsform ist ein Verschluss einer Funktionseinheit durch den Aktuator bewegbar. Soll oder muss nicht die komplette Funktionseinheit, sondern nur ein Teil davon befördert werden, so ist es insbesondere vorteilhaft, Verschlüsse der Funktionseinheit zu bewegen, speziell bei solchen Funktionseinheiten, die zur Durchführung von Servicetätigkeiten aus dem Kaffeevollautomaten nicht entnommen werden müssen, wie beispielsweise Kaffeebohnenbehälter. Ein Benutzer erhält sofort Zugang zur Funktionseinheit.

Ergänzend oder alternativ zur Bewegung eines Verschlusses kann auch eine Verriegelung der Funktionseinheit bewegt werden. Dadurch kann zum Beispiel ein Benutzer die Funktionseinheit nach der Entriegelung bewegen und/oder es kann die Öffnung eines Verschlusses der Funktionseinheit ermöglicht werden. Zum Beispiel kann eine Positionsverriegelung eines Wasserbehälters gelöst werden, wodurch der Wasserbehälter beispielsweise durch eine Feder bewegt wird. Es kann auch ein Deckel eines Kaffeebohnenbehälters durch einen Verschluss in einer Position gehalten und es einem Benutzer nur ermöglicht werden, den Deckel anzuheben, wenn der Verschluss den Deckel freigibt.

Das Prinzip der Erfindung wird im Folgenden anhand von Zeichnungen beispielshalber noch näher erläutert. Es zeigen:
- Figur 1:: eine Vorderansicht eines erfindungsgemäßen Kaffeevollautomaten in seiner Serviceposition,
- Figur 2:: eine Rückseite dieses Kaffeevollautomaten mit Funktionselementen in einer Betriebsposition,
- Figur 3:: eine Rückseite dieses Kaffeevollautomaten mit Funktionselementen in ihren Servicepositionen,
- Figur 4:: eine schematische Darstellung eines Wasserbehälters in einer Betriebsposition,
- Figur 5:: eine schematische Darstellung des Wasserbehälters in seiner Serviceposition.

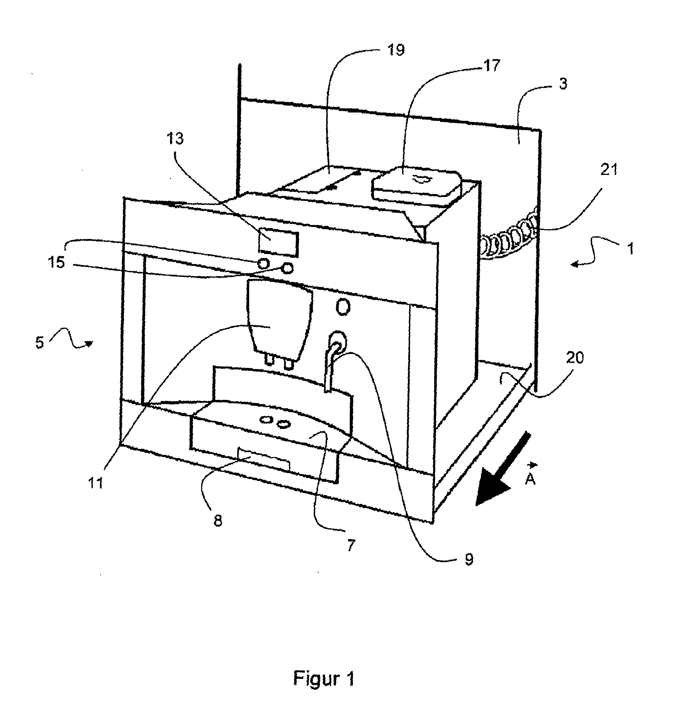

Figur 1 zeigt einen Kaffeevollautomaten 1, der in einer Ausfahrrichtung *A̅* aus einer Einbaunische 3 in eine Serviceposition geführt wird. An der Frontseite 5 des Kaffeevollautomaten 1 sind Bedienelemente 15 sowie eine Displayanzeige 13, ein Brühgetränkeauslauf 11 und ein Milchschäumer 9 angebracht. Im unteren Bereich der Frontseite 5 ragt horizontal eine Tropfwasserschale 7 mit einem Griff 8 aus der Gerätefront heraus. Im rückwärtigen Bereich des Kaffeevollautomaten 1 hinter der Frontseite 5 sind ein Kaffeebohnenbehälter 17 sowie ein Wasserbehälter 19 eingelassen. Über ein Elektrokabel 21, das zu einer Steckdose (nicht dargestellt) in der Einbaunische 3 führt, wird der Kaffeevollautomat 1 mit Strom versorgt. Er steht auf einem Einschubtisch 20, mit dessen Hilfe er durch einen Elektromotor als Aktuator (nicht dargestellt) aus der Einbaunische 3 in Ausfahrrichtung Ä heraus bzw. in die Gegenrichtung in seiner Betriebsposition in die Einbaunische 3 hinein gefahren werden kann. Der Kaffeebohnenbehälter 17 und der Wasserbehälter 19 sind Funktionseinheiten, die regelmäßig befüllt werden müssen. Dagegen muss die Tropfwasserschale 7 regelmäßig geleert werden. Der Milchschäumer 9 sollte nach jedem Kontakt mit Milch gereinigt, d. h. im weiteren Sinne gewartet werden.

Bei Bedarf für eine der genannten Servicetätigkeiten werden der Kaffeebohnenbehälter 17, der Wasserbehälter 19 und die Tropfwasserschale 7 jeweils mit Hilfe eines eigenen Aktuators (nicht dargestellt) aus ihrer jeweiligen Betriebsposition in eine Serviceposition verschoben. Bei der Tropfwasserschale 7, die von der Frontseite 5 aus bedienbar ist, genügt es, nur die Tropfwasserschale 7 zu bewegen. Beim Kaffeebohnenbehälter 17 und dem Wasserbehälter 19, die in der Betriebsposition des Kaffeevollautomaten von der Frontseite 5 her nicht zugänglich sind, wird auch der Kaffeevollautomat 1 selbst mit dem Einschubtisch 20 bewegt. Zur ggf. zusätzlichen Information des Benutzers über den jeweiligen Servicebedarf dient die Displayanzeige 13, auf der Schrift- oder Symbolanzeigen dargestellt werden. Die beiden Bedienelemente 15 dienen dazu, dass ein Benutzer vor der Bewegung des Kaffeevollautomaten 1, des Kaffeebohnenbehälters 17, des Wasserbehälter 19 und der Tropfwasserschale 7 eine Aktivierung der Bewegungen durch Knopfdruck betätigen kann.

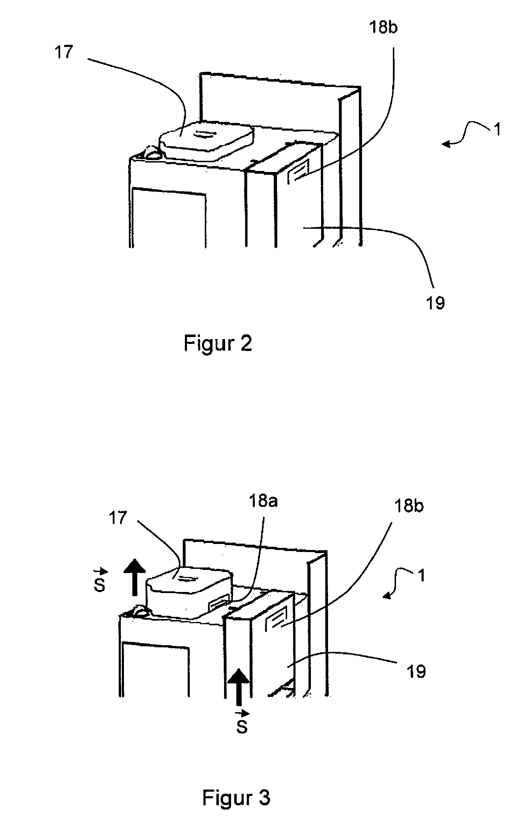

In Figur 2 ist der Kaffeevollautomat 1 in einer Ansicht von hinten dargestellt. Sowohl der Kaffeebohnenbehälter 17 als auch der Wasserbehälter 19 befinden sich in ihren Betriebspositionen. In Figur 3 ist derselbe Kaffeevollautomat 1 wie in Figur 2 dargestellt, wobei sich sowohl der Kaffeebohnenbehälter 17 als auch der Wasserbehälter 19 nach einer Bewegung in Schubrichtung *S̅* in ihren Servicepositionen befinden. Sie weisen jeweils beidseitig Griffflächen 18a, 18b auf, die in den Betriebspositionen auf einer Seite vollständig verdeckt sind. Die Schubrichtung *S̅* ist horizontal nach oben gerichtet. Als Aktuator dienen jeweils nicht dargestellte Federn, die gegen die Unterseiten des Kaffeebohnenbehälters 17 und des Wasserbehälters 19 wirken. In den Betriebspositionen sind der Kaffeebohnenbehälter 17 und der Wasserbehälter 19 mit Hilfe von Rasthaken (nicht dargestellt) so am Kaffeevollautomaten fixiert, dass die jeweilige Feder eingedrückt ist und sie nicht bewegen kann. Durch Lösen der Rasthaken mit Hilfe von Hubmagneten, Motoren oder Memorydrähten wirkt die jeweilige Feder nach oben und drückt den Kaffeebohnenbehälter 17 bzw. den Wasserbehälter 19 in diese Richtung, d. h. in Schubrichtung *S̅*. In den Servicepositionen sind beide Behälter so weit aus der Geräteeinheit des Kaffeevollautomaten 1 herausgefahren, dass die Griffflächen 18a, 18b für einen Benutzer sichtbar und erreichbar sind. Durch die sichtbaren Griffflächen 18a, 18b kann ein Benutzer einfach erkennen, dass er den jeweiligen Behälter befüllen muss. Zudem wird das weitere Herausziehen der Behälter mit Hilfe der Griffflächen 18a, 18b ermöglicht.

Wurde der jeweilige Behälter vom Benutzer befüllt, so kann er einfach von der Serviceposition zurück in die Betriebsposition zurückbewegt werden: Bei entsprechender Federhärte der Federn kann schon das nach unten drückende zusätzliche Gewicht des Füllinhalts die Behälter gegen die Schubrichtung *S̅* bewegen und die Federn jeweils wieder komprimieren. Die Rasthaken können dann automatisch an den Behältern einrasten, so dass der Betriebszustand ohne weiteres Zutun des Nutzers nach der Befüllung wieder hergestellt werden kann.

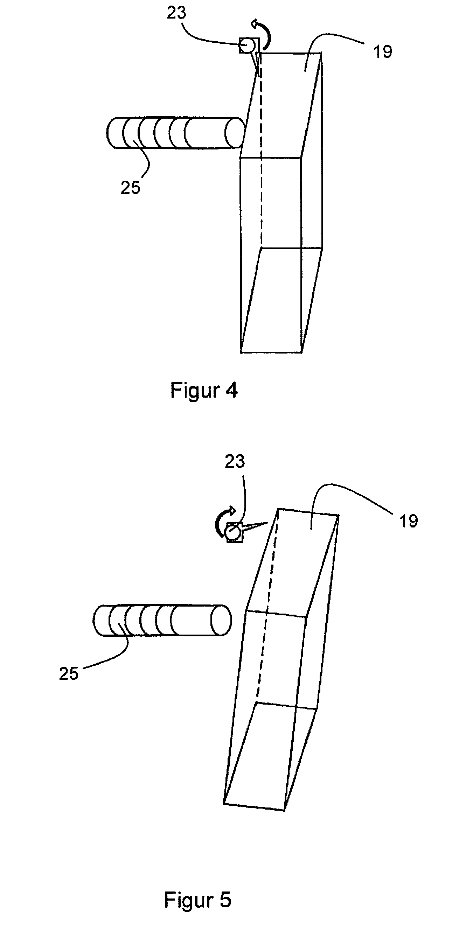

Figur 4 und Figur 5 stellen die Wirkungsweise einer Feder 25 in Zusammenhang mit der Beförderung eines Wasserbehälters in eine schräg vertikale Richtung dar. Ein Wasserbehälter 19 wird mit Hilfe eines Rasthakens 23 in seiner Betriebsposition gehalten. Die Feder 25 drückt seitlich gegen den Wasserbehälter 19, kann jedoch ihre Wirkung nicht so entfalten, dass daraus eine Bewegung des Wasserbehälters 19 im Wirkrichtung der Feder erfolgt, weil der Rasthaken 23 dies verhindert. Bei einem Servicebedarf löst ein Aktuator den Rasthaken 23, wodurch sich die Wirkung der Feder 25 gegen den Wasserbehälter 19 entfalten kann. Der Wasserbehälter 19 wird seitlich nach rechts gedrückt, wodurch für einen Benutzer deutlich wird, dass sich der Wasserbehälter 19 nicht mehr in Betriebsposition B, sondern in seiner Serviceposition befindet.

Da es sich bei den vorhergehenden, detailliert beschriebenen Funktionseinheiten um Ausführungsbeispiele handelt, können sie in üblicher Weise von einem Fachmann in einem weiten Umfang modifiziert werden, ohne den Bereich der Erfindung zu verlassen. Insbesondere können auch die konkreten Ausgestaltungen des Kaffeevollautomaten in anderer Form als in der hier beschriebenen erfolgen. Analog zu dem hier dargestellten Kaffeebohnenbehälter 17, dem Wasserbehälter 19 und der Tropfwasserschale 7 können auch weitere Funktionseinheiten wie ein Pulverschacht oder eine Mahleinheit angeordnet und befördert werden, beispielsweise um ihre Reinigung oder Entkalkung mit Hilfe von Reinigungstabletten oder Flüssigkeiten zu ermöglichen. Jede Funktionseinheit kann außerdem mit einer Beleuchtung versehen sein oder beleuchtet werden, wenn ein Servicebedarf besteht. Außerdem kann beispielsweise die Gerätefront in einer anderen Form ausgestaltet werden, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1: Kaffeevollautomat
- 3: Einbaunische
- 5: Frontseite
- 7: Tropfwasserschale
- 8: Griff
- 9: Milchschäumer
- 11: Brühgetränkeauslauf
- 13: Displayanzeige
- 15: Bedienelemente
- 17: Kaffeebohnenbehälter
- 18a, 18b: Griffflächen
- 19: Wasserbehälter
- 20: Einschubtisch
- 21: Elektrokabel
- 23: Rasthaken
- 25: Feder
- *A̅*: Ausfahrrichtung
- *S̅*: Schubrichtung

## Patentansprüche

1. Kaffeevollautomat (1) mit Funktionseinheiten (1, 7, 9, 11, 17, 19), die zur Durchführung von Servicetätigkeiten in eine Serviceposition bewegbar sind, die sich von Betriebspositionen der Funktionseinheiten (1, 7, 9, 11, 17, 19) unterscheidet, **gekennzeichnet durch** einen Aktuator, der bei einem Servicebedarf die betroffene Funktionseinheit (1, 7, 9, 11, 17, 19) selbsttätig aus einer Betriebsposition in die Serviceposition befördert.

2. Kaffeevollautomat gemäß Anspruch 1, **gekennzeichnet durch** eine Aktivierungsvorrichtung (15), die zu einer Initiierung der Beförderung **durch** den Aktuator von einem Benutzer betätigbar ist.

3. Kaffeevollautomat gemäß einem der vorhergehenden Ansprüche, **gekennzeichnet durch** eine akustische und/oder optische Signalvorrichtung (13) eines Servicebedarfs.

4. Kaffeevollautomat gemäß einem der vorhergehenden Ansprüche, **gekennzeichnet durch** einen Motor, vorzugsweise einen Elektromotor, als Aktuator.

5. Kaffeevollautomat gemäß einem der vorhergehenden Ansprüche, **gekennzeichnet durch** eine Sicherheitssensorik und -steuerung, die die Beförderung abbricht, wenn ein unerwartet hoher mechanischer Widerstand entgegen der Beförderungsrichtung (*A̅*, *S̅*) des Aktuators wirkt und/oder bevor der Kaffeevollautomat in seiner Lage instabil wird.

6. Kaffeevollautomat gemäß einem der vorhergehenden Ansprüche, **gekennzeichnet durch** mindestens eine der folgenden Komponenten als Funktionseinheit (7, 9, 11, 17, 19): einen Wasserbehälter (19), einen Kaffeebohnenbehälter (17), einen Kaffeemehlbehälter, einen Tresterbehälter, einen Restwasserbehälter (7), eine Dampfdüse (9), eine Brüheinheit, einen Pulverschacht, eine Mahleinheit.

7. Kaffeevollautomat gemäß einem der vorhergehenden Ansprüche zum Einbau in eine Einbaunische (3), **dadurch gekennzeichnet, dass** der Aktuator bei einem Servicebedarf mindestens einer Funktionseinheit (1, 7, 9, 11, 17, 19) den Kaffeevollautomaten in seine Serviceposition bewegt.

8. Kaffeevollautomat gemäß einem der vorhergehenden Ansprüche, **dadurch gekennzeichnet, dass** der Aktuator die Funktionseinheit (1, 7, 9, 11, 17, 19) im Betrieb nach der Durchführung der Servicetätigkeiten in Richtung von der Serviceposition in die Betriebsposition bewegt.

9. Kaffeevollautomat gemäß einem der vorhergehenden Ansprüche, **gekennzeichnet durch** einen Verschluss als **durch** den Aktuator bewegbare Funktionseinheit.

## Claims

1. Coffee machine with functional units (1, 7, 9, 11, 17, 19) which for performance of service actions are movable into a service position differing from operating positions of the functional units (1, 7, 9, 11, 17, 19), **characterised by** an actuator which in the case of a service requirement automatically conveys the functional unit (1, 7, 9, 11, 17, 19) concerned from an operating position to the service position.

2. Coffee machine according to claim 1, **characterised by** an activating device (15) which is actuable by a user for initiation of the conveying by the actuator.

3. Coffee machine according to one of the preceding claims, **characterised by** an acoustic and/or optical signal device (13) of a service requirement.

4. Coffee machine according to any one of the preceding claims, **characterised by** a motor, preferably an electric motor, as actuator.

5. Coffee machine according to any one of the preceding claims, **characterised by** a safety sensor system and control which interrupts the conveying when an unexpectedly high mechanical resistance to the conveying direction (*̅A̅*̅, *̅S̅*̅)
of the actuator acts and/or before the coffee machine is unstable in its position.

6. Coffee machine according to any one of the preceding claims, **characterised by** at least one of the following components as functional unit (7, 9, 11, 17, 19): a water container (19), a coffee beans container (17), a coffee grinds container, a detritus container, a residual water container (7), a steam nozzle (9), a brewing unit, a powder shaft and a milling unit.

7. Coffee machine according to any one of the preceding claims for installation in an installation niche (3), **characterised in that** the actuator in the case of a service requirement moves at least one functional unit (1, 7, 9, 11, 17, 19) of the coffee machine to its service position.

8. Coffee machine according to any one of the preceding claims, **characterised in that** after performance of the service actions the actuator moves the functional unit (1, 7, 9, 11, 17, 19) in operation in direction from the service position to the operating position.

9. Coffee machine according to any one of the preceding claims, **characterised by** a lock as functional unit movable by the actuator.

## Revendications

1. Machine à café entièrement automatique (1) comprenant des unités fonctionnelles (1, 7, 9, 11, 17, 19) qui, pour la réalisation d'activités de service, sont déplaçables dans une position de service qui se distingue des positions de fonctionnement des unités fonctionnelles (1, 7, 9, 11, 17, 19), **caractérisée par** un actionneur qui, en cas de besoin d'un service, transporte automatiquement l'unité fonctionnelle concernée (1, 7, 9, 11, 17, 19) d'une position de fonctionnement dans la position de service.

2. Machine à café entièrement automatique selon la revendication 1, **caractérisée par** un dispositif d'activation (15) qui peut être commandé par un utilisateur pour une initiation du transport par l'actionneur.

3. Machine à café entièrement automatique selon l'une quelconque des revendications précédentes, **caractérisée par** un dispositif de signalisation (13) acoustique et/ou optique d'un besoin de service.

4. Machine à café entièrement automatique selon l'une quelconque des revendications précédentes, **caractérisée par** un moteur, de préférence un moteur électrique, en tant qu'actionneur.

5. Machine à café entièrement automatique selon l'une quelconque des revendications précédentes, **caractérisée par** des capteurs de sécurité et une commande de sécurité qui interrompt le transport lorsqu'une résistance mécanique soudainement élevée agit contre le dispositif de transport (*A̅,̅ S̅*) de l'actionneur et/ou avant que la machine à café entièrement automatique ne devienne instable dans sa position.

6. Machine à café entièrement automatique selon l'une quelconque des revendications précédentes, **caractérisée par** au moins un des composants suivants en tant qu'unité fonctionnelle (7, 9, 11, 17, 19) : un réservoir à eau (19), un réservoir à grains de café (17), un réservoir à café moulu, un réservoir à marc, un réservoir d'eau résiduelle (7), une buse à vapeur (9), une unité d'infusion, un couloir à poudre, un moulin.

7. Machine à café entièrement automatique selon l'une quelconque des revendications précédentes, destinée à être encastrée dans une niche d'incorporation, **caractérisée en ce que** l'actionneur, en cas de besoin d'un service d'au moins une unité fonctionnelle (1, 7, 9, 11, 17 19), déplace la machine à café entièrement automatique dans sa position de service.

8. Machine à café entièrement automatique selon l'une quelconque des revendications précédentes, **caractérisée en ce que** l'actionneur déplace l'unité fonctionnelle (1, 7, 9, 11, 17, 19) en fonctionnement en direction allant de la position de service en position de fonctionnement après la réalisation des activités de service.

9. Machine à café entièrement automatique selon l'une quelconque des revendications précédentes, **caractérisée par** une fermeture en tant qu'unité fonctionnelle déplaçable par l'actionneur.
